# FASCICULE DE BREVET EUROPEEN

(11) **EP 0 837 255 B1**
(45) Date de publication et mention de la délivrance du brevet: **27.03.2002**
(21) Numéro de dépôt: 97402459.8
(22) Date de dépôt: 17.10.1997
(51) Int. Cl.: F16B 19/00, F16B 12/24, F16B 21/08

(54) **Cheville pour assembler des éléments rigides**
Dübel zum Verbinden starrer Elemente
Dowel for connecting rigid elements

(30) Priorité: 18.10.1996 FR 9612709
(43) Date de publication de la demande: 22.04.1998
(73) Titulaire: Campenon Bernard SGE, 92500 Rueil Malmaison (FR); Sofrasar, 57200 Sarreguemines (FR)
(72) Inventeur: Petit, François, 92500 Rueil Malmaison (FR); Jeanroy, 57070 Metz Vallieres (FR)
(74) Mandataire: Derambure, Christian

(56) Documents cités:
- WO-A-92/17706
- FR-A- 2 675 219
- GB-A- 1 463 252
- US-A- 3 883 258
- US-A- 4 454 699
- US-A- 4 484 407

## Description

La présente invention concerne une cheville comportant un corps allongé pourvu d'une succession d'ailettes périphériques s'étendant substantiellement transversalement par rapport à la direction longitudinale de la cheville.

Plus particulièrement, la présente invention concerne une cheville destinée à l'assemblage d'éléments rigides, notamment d'éléments en béton préfabriqués.

Des chevilles de ce type sont décrites notamment dans les documents EP-0 317 220, US-5,232,302, FR-2 511 076, US 4 454 699 et GB 1 463 252.

Les chevilles de l'art antérieur présentent cependant un certain nombre d'inconvénients, à savoir notamment :
- La difficulté de l'assemblage : en cas d'erreur lors de l'introduction de la cheville dans un orifice de forme sensiblement complémentaire, il est généralement impossible de l'introduire de nouveau puisqu'elle est endommagée, voire détruite, lors de son extraction ;
- Le risque de désengagement de la cheville entraînant la destruction de la cheville ou de l'élément rigide.

Le document US 4 454 699 décrit une cheville présentant un corps cylindrique comprenant des ailettes périphériques s'étendant transversalement à l'axe du corps, les dites ailettes étant situées de part et d'autre d'une partie centrale.

Les ailettes présentent toutes la même épaisseur - en direction radiale - celle-ci étant sensiblement supérieure au diamètre de l'orifice dans laquelle la cheville est destinée à être insérée. Lors de l'introduction de la cheville dans l'orifice, les ailettes frottent contre la surface interne de l'orifice, et sont déformées.

Ainsi, au fur et à mesure de l'introduction de la cheville dans l'orifice, les forces de frottement augmentent, de sorte qu'il est de plus en plus difficile d'enfoncer la dite cheville. Le document US 4 454 699 ne permet donc pas de prévoir une cheville de grande longueur, ce qui limite les domaines d'application.

Le document GB 1 463 252 propose une cheville présentant un corps cylindrique comprenant une partie médiane cylindrique et deux parties d'ancrage situées de part et d'autre de la dite partie médiane, chaque partie d'ancrage comportant:
- une pluralité d'ailettes sensiblement discoïdales, aux extrémités effilées, de même axe que le corps, et de diamètre légèrement supérieur au diamètre de l'orifice dans laquelle la cheville est destinée à être insérée ;
- une ailette terminale (située à l'extrémité libre de la partie d'ancrage) de forme similaire aux autres ailettes, mais de diamètre légèrement inférieur ;
- une partie cylindrique de stabilisation.

L'ailette terminale, de diamètre plus faible, est prévue pour faciliter l'insertion de la cheville dans un orifice. Toutefois, elle ne permet pas à elle seule d'assurer un bon centrage de la cheville dans le dit orifice, une partie cylindrique de stabilisation étant nécessaire à cet effet sur chacune des parties d'ancrage.

Ainsi, la cheville décrite dans le document GB 1 463 252 présente deux inconvénients principaux :
- d'une part, comme dans le cas du document US 4 454 699, il n'est pas envisageable que la cheville possède une trop grande longueur, du fait de l'existence de forces de frottement importantes rendant difficile l'introduction de la cheville dans un orifice ;
- d'autre part, la présence d'une partie cylindrique de stabilisation sur chacune des parties d'ancrage est nécessaire pour obtenir un bon centrage de la cheville.

Le but de la présente invention est de mettre au point une liaison par cheville d'éléments rigides, notamment en béton, qui ne présente pas les défauts et risques des liaisons par cheville de l'art antérieur.

Ce but est atteint grâce à une cheville du type défini d'entrée, qui comprend une partie médiane et deux parties d'ancrage portant lesdites ailettes, situées de part et d'autre de ladite partie médiane, chacune des deux parties d'ancrage présentant au moins deux zones d'ailettes comprenant chacune plusieurs ailettes, les dites zones d'ailettes présentant des épaisseurs totales -en direction radiale- différentes, la zone la plus épaisse de chacune des dites parties d'ancrage étant la plus proche de la partie médiane et la zone la moins épaisse de chacune des dites parties d'ancrage étant la plus proche de l'extrémité correspondante de la cheville.

Ainsi, l'approche et l'introduction de la cheville dans un orifice correspondant sont facilitées.

Selon un premier mode de réalisation de la cheville selon l'invention, l'épaisseur du corps est identique dans les zones les moins épaisses et dans les zones les plus épaisses.

Ainsi, dans ce mode de réalisation, la hauteur des ailettes dans les zones les plus épaisses est supérieure à la hauteur des ailettes dans les zones les moins épaisses.

Selon un autre mode de réalisation de la présente invention, l'épaisseur du corps est plus importante dans les zones les plus épaisses que dans les zones les moins épaisses, de telle sorte que la hauteur des ailettes dans les zones les plus épaisses est inférieure à la hauteur des ailettes dans les zones les moins épaisses.

La cheville selon l'invention est de préférence venue d'une pièce. Elle est réalisée en un matériau souple mais non cassant.

Elle peut être réalisée par moulage de matières plastiques, en particulier les polyamides haute résistance.

De tels matériaux sont particulièrement avantageux pour la fabrication de la cheville par injection à haute pression dans des moules spécifiques, du fait de leur résistance à différents types de contraintes mécaniques, de leurs propriétés de déformation plastique et de leur résistance à différents facteurs extérieurs tels que :
- rayons Ultra-Violets
- température (-30°C/+60°C)
- hydrocarbures, graisse de joints
- ozone
- sulfate, carbonate, chlorure
- calcium
- ciment, produits de cure du béton
- micro-organismes
- et divers agents chimiques agressifs susceptibles d'être contenus dans les sols, les eaux ou l'air.

La présente invention sera mieux comprise grâce à la description de sa mise en oeuvre et des exemples de réalisation non limitatifs, accompagnés des figures qui les illustrent. Parmi celles-ci :
- La figure 1 montre un premier mode de réalisation de l'invention, en coupe suivant l'axe longitudinal.
- la figure 1A en montre une coupe transversale selon A-A.
- La figure 2 montre un deuxième mode de réalisation de l'invention.
- La figure 3 montre un troisième mode de réalisation de l'invention.

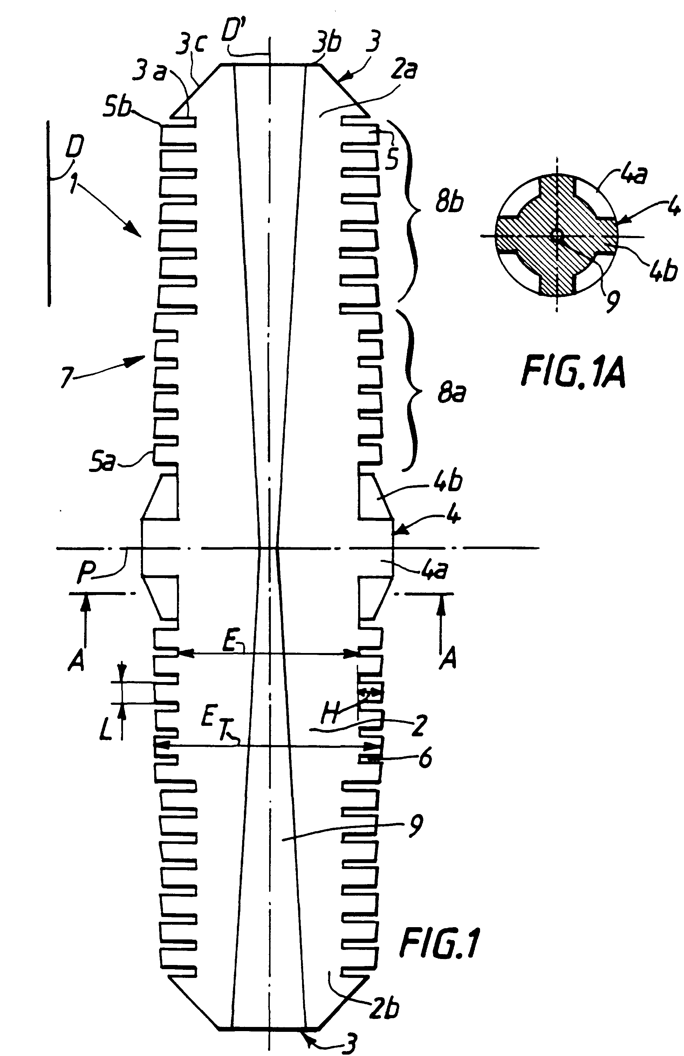

La cheville 1 de l'invention, représentée sur les figures 1 à 3, comporte un corps 2 allongé, de contour sensiblement circulaire, s'étendant suivant une direction longitudinale D.

Le corps 2 est prolongé à chacune de ses extrémités 2a, 2b par un embout 3, de forme générale tronconique et de même axe D', sa grande base 3a étant adjacente ou confondue à l'extrémité 2a, 2b du corps 2.

Le diamètre de la grande base 3a de l'embout 3 est supérieur à celui du corps 2 au niveau de son extrémité 2a, 2b, tandis que le diamètre de la petite base 3b est inférieur à celui du corps 2.

La partie médiane du corps 2 comporte, d'un seul tenant, une partie renforcée 4.

Entre chaque embout 3 et la partie médiane 4, le corps 2 comporte des ailettes 5, venues de matière.

Ces ailettes 5 se présentent sous la forme d'anneaux entourant le corps 2 et s'étendant sensiblement perpendiculairement à l'axe D' du corps 2.

Elles sont séparées les unes des autres, suivant la direction longitudinale D de la cheville 1, par un espace intersticiel 6.

Les deux parties du corps 2 comportant les ailettes 5 forment des parties d'ancrage 7, terminées par un embout 3 et destinées à être ancrées avec ce dernier dans des orifices d'éléments rigides, notamment en béton.

Dans les modes de réalisation représentés, la cheville 1 présente une symétrie plane par rapport à un plan médian P perpendiculaire à l'axe D.

Cette caractéristique permet de faciliter la fabrication de la cheville 1 et sa mise en place.

Du fait de cette symétrie, on ne décrira dans la suite du texte qu'une des deux parties d'ancrage 7, l'autre étant identique.

La partie d'ancrage 7 comprend deux zones 8a, 8b comportant chacune un certain nombre d'ailettes 5.

Dans la suite du texte, on entend par :
- longueur de la cheville 1, sa dimension suivant l'axe D', de la petite base 3b d'un embout 3 à l'autre ;
- épaisseur E du corps 2, sa dimension comptée perpendiculairement à l'axe D', c'est-à-dire au niveau des espaces interstitiels 6 ; dans les modes de réalisation représentés, elle correspond au diamètre du corps circulaire 2 ;
- hauteur H d'une ailette 5, sa dimension comptée à partir de la surface extérieure du corps 2 suivant la direction perpendiculaire à l'axe D' ;
- largeur L d'une ailette 5, sa dimension comptée parallèlement à l'axe D' ; et
- épaisseur totale E_{T} d'une zone 8a, 8b, l'épaisseur E du corps 2, ajoutée à la hauteur H des ailettes 5 de chaque côté du corps 2, dans une direction perpendiculaire à l'axe D'.

Les zones 8a, 8b présentent chacune des épaisseurs totales E_{T} différentes.

La zone la plus épaisse 8a est adjacente à la partie médiane 4, tandis que la zone la moins épaisse 8b est adjacente à l'embout 3.

Il est entendu que la partie d'ancrage 7 peut comporter plus de deux zones 8a, 8b, l'épaisseur E_{T} de chaque zone 8a, 8b allant en décroissant plus la zone est proche de l'embout 3.

Par ailleurs, la dimension de la grande base 3a de l'embout 3 respecte cette notion de décroissance en étant inférieure à l'épaisseur totale E_{T} de la zone 8b, qui est adjacente à l'embout 3.

Plus précisément, le prolongement des faces latérales 3c des embouts 3, vers la partie médiane 4, coïncide sensiblement avec l'angle 5b le plus proche, de l'ailette 5 directement adjacente.

En outre, la différence entre l'épaisseur totale E_{T} de la zone 8b et le diamètre de la grande base 3a de l'embout 3 est sensiblement inférieure à la largeur de l'espace 6 -comptée suivant l'axe D'-.

La différence d'épaisseur E_{T} des zones 8a, 8b peut se traduire soit par une différence de hauteur H des ailettes 5 d'une zone 8a à l'autre 8b, soit par une différence d'épaisseur E du corps 2 d'une zone 8a à l'autre 8b, l'épaisseur E étant supérieure dans la zone 8a.

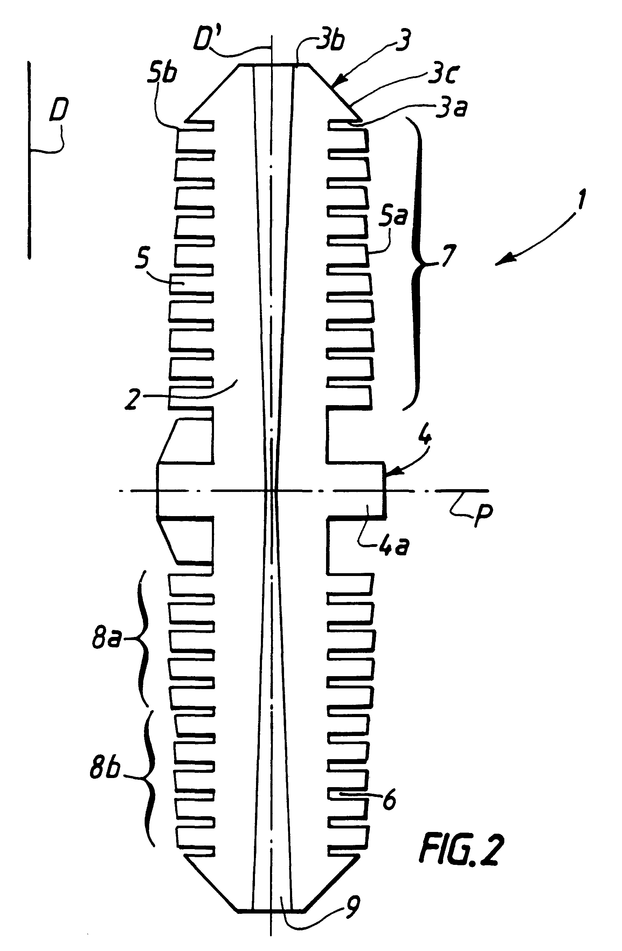

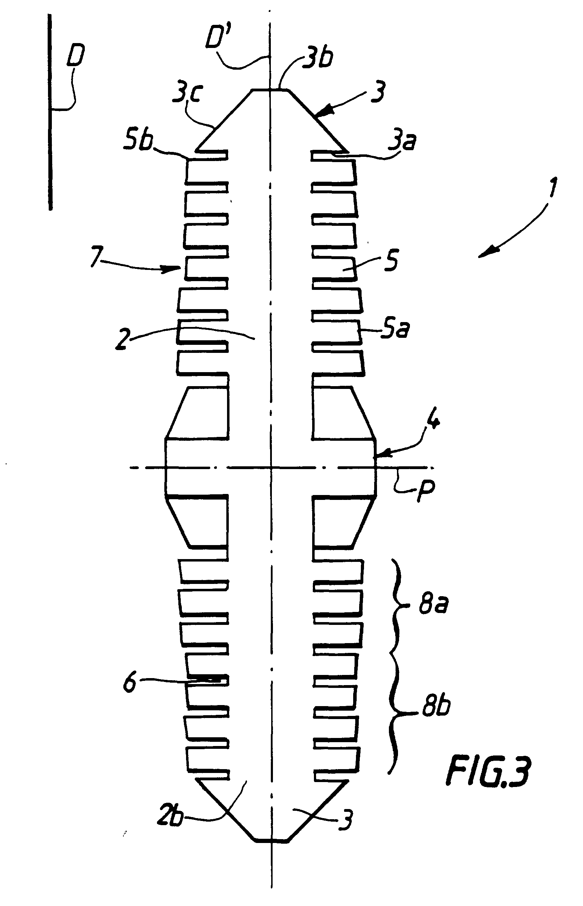

Dans le premier cas, l'épaisseur E du corps 2 est constante d'une extrémité 2a à l'autre 2b (figures 2 et 3).

Dans le second cas, la hauteur H des ailettes 5 est inférieure dans la zone 8a (figure 1).

La longueur de la cheville 1 est comprise par exemple entre 100 et 400 mm et son épaisseur totale E_{T} comprise entre 30 et 80 mm. De préférence, la longueur est comprise entre 175 et 266 mm et l'épaisseur totale E_{T} comprise entre 40 et 63 mm.

Pour les dimensions globales ci-dessus, la hauteur H des ailettes 5 est comprise entre 3 et 30 mm et la largeur L des ailettes est comprise entre 1 mm et un tiers de leur hauteur H. L'espace interstitiel 6 entre deux ailettes successives est compris entre 0,5 et 30 mm.

On peut également prévoir un espace 6 plus important entre l'ailette 5 de la zone 8a et l'ailette voisine de la zone 8b, qu'entre deux ailettes successives d'une même zone.

Pour faciliter l'insertion de la partie d'ancrage 7 et l'ancrage des ailettes 5 dans un orifice correspondant, les ailettes 5 peuvent présenter une pente.

Plus précisément, leur surface périphérique extérieure 5a est inclinée en direction de l'embout 3, de sorte que l'ailette présente la forme d'un tronc de cône aplati.

Cette pente est comprise entre 0 mm et la largeur L de l'ailette 5.

Dans les modes de réalisation représentés aux figures 1 et 2, le corps 2 comporte un trou traversant 9. Ce trou 9 s'étend dans le sens longitudinal de la cheville 1 autour de l'axe D', d'un embout 3 à l'autre.

Dans chaque partie d'ancrage 7 terminée par l'embout 3, il définit une forme tronconique, dont la grande base débouche dans la petite base 3b de l'embout 3 et dont la petite base s'étend au centre de la cheville 1 dans le plan médian P. Les petites bases ainsi formées dans chaque partie d'ancrage 7 sont donc confondues dans le plan médian P, de sorte que le trou 9 présente une forme sensiblement biconique.

Par cet agencement, le matériau de la cheville est rendu plus déformable à proximité des embouts 3, ce qui facilite l'approche et le guidage des parties d'ancrage 7 à l'intérieur des orifices des éléments à assembler. Par contre, la partie médiane renforcée 4 présente une résistance renforcée aux cisaillements.

Le trou 9 permet également de faciliter la circulation de l'air, et de l'eau, le cas échéant, dans lesdits orifices, lors de la pénétration de la cheville.

Il est également envisageable de prévoir un trou 9 de section constante d'un embout 3 à l'autre.

Les éléments rigides, notamment en béton, destinés à être assemblés à l'aide de la cheville 1 selon l'invention, reçoivent chacun une réservation -ou orifice-, non représentée, c'est-à-dire une forme négative moulée, dans laquelle est emmanchée à force la cheville 1.

Ces éléments sont par exemple en béton vibré brut de décoffrage.

La forme moulée est réalisée à l'aide d'une pièce métallique, extraite lorsque le béton a obtenu une résistance suffisante. De ce fait, la surface latérale intérieure de la forme négative est relativement lisse, ce qui facilite la pénétration de la cheville 1.

La dimension de la réservation doit être inférieure ou sensiblement égale à l'épaisseur totale E_{T} de la cheville 1 pour permettre un serrage par friction.

De plus, la dimension de la réservation, c'est-à-dire le diamètre de la forme négative, est choisi de telle sorte que les ailettes 5 sont courbées en arrière, en forme de "parapluie", dans la limite d'élasticité du matériau, qui subit donc une déformation plastique locale au niveau de ces ailettes.

Le fait que les ailettes 5 comportent une pente sur leur face extérieure 5a permet d'améliorer leur contact contre les parois de la forme négative lors d'une telle déformation.

La différence optimale entre la dimension extérieure de la cheville 1 - son épaisseur totale E_{T}- et la dimension de la réservation dépend notamment de la hauteur H et de la largeur L des ailettes. Cette différence est typiquement de l'ordre de 0,5 à 5 mm. Les dimensions de la pièce métallique permettant de mouler la réservation sont ainsi déterminées.

L'auto-serrage des ailettes 5 lors de l'emmanchement de la cheville 1 induit leur déformation plastique en forme de "parapluie" et un coincement des ailettes 5.

Cet auto-serrage confère une résistance élevée à l'arrachement lorsque la cheville est soumise à un effort de traction.

Cette résistance à la traction est augmentée par la courbure des ailettes 5, en forme de "parapluie", qui provoque un serrage additionnel et proportionnel à l'effort de traction.

De plus, la friction importante de la matière de la cheville sur la forme négative participe activement à cette résistance.

La partie médiane 4 de la cheville 1, renforcée, favorise la tenue sous charge.

On décrit maintenant trois modes de réalisation particuliers de l'invention, représentés sur les figures 1 à 3, et donnés à titre d'exemples non limitatifs.

### Exemple 1 :

La cheville 1 montrée sur la figure 1 a une longueur totale de 266 mm.

Les zones 8b proches des embouts 3 portent chacune sept ailettes 5, qui s'élèvent à une hauteur H de 10,5 mm autour de la surface extérieure du corps 2.

Les zones 8a proches de la partie médiane 4 portent chacune six ailettes 5 qui s'élèvent chacune à une hauteur H de 7 mm.

Les ailettes 5 ont une largeur L constante de 5,5 mm et présentent une pente de 1 mm.

L'épaisseur E du corps 2 est plus faible tout en restant constante dans les zones 8b.

En outre, elle est plus importante et reste constante dans les zones 8a et la partie médiane 4.

La partie médiane 4, représentée en détail à la figure 1A, comporte un anneau périphérique 4a, venu de matière, renforcé de part et d'autre et à intervalles réguliers par quatre paires de renforts 4b attenants à la partie médiane 4 d'une part et à l'anneau périphérique 4a d'autre part.

Les renforts 4b d'une même paire sont situés en regard, de part et d'autre de l'anneau périphérique 4a.

### Exemple 2 :

La cheville 1 montrée sur la figure 2 porte cinq ailettes 5 dans chacune de ses zones 8a, 8b.

L'épaisseur E du corps est constante sur toute sa longueur et est de 30 mm ; les hauteurs H des ailettes 5 sont de 10 mm dans les zones 8b proches des embouts 3, et de 11,5mm dans les zones 8a proches de la partie médiane 4.

La partie médiane 4 comporte également un anneau périphérique 4a qui n'est renforcé que par deux paires de renforts 4b, disposés sensiblement de la même manière que dans l'exemple 1.

### Exemple 3 :

La cheville 1 montrée sur la figure 3 porte respectivement quatre et trois ailettes 5 dans ses zones respectivement 8b, 8a.

L'épaisseur E du corps 2, de 20 mm, est constante sur toute sa longueur et la cheville 1 n'a pas de trou central.

Les hauteurs H des ailettes 5 sont de 10 mm dans les zones 8b et 11,5 mm dans les zones 8a.

La partie médiane 4 est de structure sensiblement identique à celle de la figure 1.

Différentes expériences effectuées sur la cheville 1 de l'invention montrent que la matière utilisée ainsi que le principe d'assemblage permettent une déformation avant rupture, ce qui évite le risque de rupture brutale.

Bien entendu, d'autres réalisations peuvent être envisagées sans pour autant sortir du cadre des revendications.

Les modes de réalisation particuliers décrits ci-dessus concernent des chevilles dont la section transversale corps et ailettes, est circulaire.

Cependant, soit la section du corps 2, soit la section des ailettes 5, soit les deux pourraient être de contour elliptique ou polygonal, par exemple carré ou hexagonal. Il en est de même pour les embouts 3.

Avec de telles sections, la cheville assure également un blocage en rotation des pièces de béton assemblées.

De même, les ailettes 5 pourraient ne pas être présentes sur toute la périphérie du corps de la cheville.

Elles pourraient par exemple être constituées de plusieurs segments d'anneau. Le nombre de ces segments étant défini selon les besoins.

En outre, on peut envisager que les parties de la cheville 1, disposées de part et d'autre du plan médian P, aient leur axe longitudinal respectif décalé radialement, l'un par rapport à l'autre.

Cette réalisation permettrait d'assembler des éléments rigides dont les orifices ne sont pas exactement en regard l'un de l'autre.

## Revendications

1. Cheville comportant un corps (2) allongé suivant une direction longitudinale (D), pourvu d'une succession d'ailettes (5) périphériques s'étendant substantiellement transversalement par rapport à la direction longitudinale (D) de la cheville (1), ladite cheville comprenant une partie médiane (4) et deux parties d'ancrage (7) portant lesdites ailettes (5), situées de part et d'autre de ladite partie médiane (4), **caractérisée en ce que** chacune des deux parties d'ancrage (7) présente au moins deux zones d'ailettes (8a, 8b) comprenant chacune plusieurs ailettes (5), les dites zones d'ailettes (8a, 8b) présentant des épaisseurs totales -en direction radiale- différentes, la zone la plus épaisse (8a) de chacune des dites parties d'ancrage (7) étant la plus proche de la partie médiane (4) et la zone la moins épaisse (8b) de chacune desdites parties d'ancrage (7) étant la plus proche de l'extrémité correspondante (3) de la cheville (1).

2. Cheville selon la revendication 1, **caractérisée en ce que** les ailettes (5) sont séparées, suivant la direction longitudinale (D) de la cheville (1), par un espace (6).

3. Cheville selon la revendication 1 ou 2, **caractérisée en ce que** les ailettes (5) présentent sensiblement une forme d'anneau.

4. Cheville selon l'une des revendications revendications 1 à 3, **caractérisée en ce que** ladite cheville (1) présente une symétrie plane par rapport à un plan médian (P) perpendiculaire à la direction (D).

5. Cheville selon l'une des revendications 1 à 3, **caractérisée en ce que** les parties de la cheville (1) disposées de part et d'autre d'un plan médian (P) perpendiculaire à la direction (D) ont leur axe longitudinal décalé radialement.

6. Cheville selon l'une des revendications 1 à 5, **caractérisée en ce que** ladite cheville (1) est traversée par un trou (9) débouchant de part en part dans le sens longitudinal.

7. Cheville selon la revendication 6, **caractérisée en ce que** le trou (9) est coaxial avec la cheville (1) et de forme substantiellement biconique, la dimension dudit trou (9) étant le plus grand à proximité des deux extrémités (3) de la cheville.

8. Cheville selon l'une des revendications 1 à 7, **caractérisée en ce que** l'épaisseur du corps (2) est identique dans les zones les moins épaisses (8b) et dans les zones les plus épaisses (8a).

9. Cheville selon l'une des revendications 1 à 7, **caractérisée en ce que** l'épaisseur du corps (2) est plus importante dans les zones les plus épaisses (8a) que dans les zones les moins épaisses (8b), de telle sorte que la hauteur des ailettes (5) dans les zones les plus épaisses (8b) est inférieure à la hauteur des ailettes (5) dans les zones les moins épaisses (8a).

10. Cheville selon l'une des revendications précédentes, **caractérisée en ce que** sa longueur est comprise entre 100 et 400 mm et de préférence entre 175 et 266 mm et l'épaisseur totale comprise entre 30 et 80 mm et de préférence entre 40 et 63 mm.

11. Cheville selon l'une des revendications précédentes, **caractérisée en ce que** la hauteur des dites ailettes (5) -comptée perpendiculairement à la direction longitudinale (D) de la cheville- est comprise entre 3 et 30 mm.

12. Cheville selon la revendication 11, **caractérisée en ce que** la largeur des dites ailettes (5) - comptée parallèlement à la direction longitudinale (D) de la cheville- est comprise entre 1 mm et le tiers de la hauteur des ailettes (5).

13. Cheville selon l'une des revendications précédentes, **caractérisée en ce que** l'espace (6) entre deux ailettes (5) successives est compris entre 0,5 et 30 mm.

14. Cheville selon l'une des revendications 12 ou 13, **caractérisée en ce que** la face extérieure des ailettes (5) présente une pente comprise entre 0 mm et la largeur des ailettes (5).

15. Cheville selon l'une des revendications précédentes, **caractérisée en ce qu'**elle est réalisée en un matériau souple mais non cassant.

16. Cheville selon la revendication 15, **caractérisée en ce qu'**elle est réalisée en polyamide haute résistance.

## Patentansprüche

1. Dübel mit einem sich in Längsrichtung (D) erstreckenden Körper (2) mit einer Reihe von peripheren Flügeln (5), die im wesentlichen quer zur Längsrichtung (D) des Dübels (1) verlaufen, wobei der besagte Dübel einen mittleren Teil (4) und zwei die besagten Flügel (5) tragende, auf beiden Seiten des besagten mittleren Teils (4) angeordnete Verankerungsteile (7) umfasst, **dadurch gekennzeichnet, dass** jeder der beiden Verankerungsteile (7) mindestens zwei Flügelzonen (8a, 8b) mit jeweils mehreren Flügeln (5) aufweist, wobei die besagten Flügelzonen (8a, 8b) - in radialer Richtung - unterschiedliche Gesamtdicken aufweisen, wobei die dickste Zone (8a) jeder der besagten Verankerungsteile (7) dem mittleren Teil (4) am nahesten und die dünnste Zone (8b) jeder der besagten Verankerungsteile (7) dem entsprechenden Ende (3) des Dübels (1) am nahesten liegt.

2. Dübel nach Anspruch 1, **dadurch gekennzeichnet, dass** die Flügel (5) in Längsrichtung (D) des Dübels (1) durch einen Freiraum (6) getrennt sind.

3. Dübel nach Anspruch 1 oder 2, **dadurch gekennzeichnet, dass** die Flügel (5) etwa ringförmig sind.

4. Dübel nach einem der Ansprüche 1 bis 3, **dadurch gekennzeichnet, dass** der besagte Dübel (1) in Bezug auf eine mittlere, lotrecht zur Richtung (D) verlaufende Ebene (P) eine flache Symmetrie aufweist.

5. Dübel nach einem der Ansprüche 1 bis 3, **dadurch gekennzeichnet, dass** die Längsachse der auf beiden Seiten einer mittleren, lotrecht zur Richtung (D) verlaufenden Ebene (P) angeordneten Teile des Dübels (1) radial versetzt ist.

6. Dübel nach einem der Ansprüche 1 bis 5, **dadurch gekennzeichnet, dass** der besagte Dübel (1) von einem in Längsrichtung beidseitig mündenden Loch (9) durchquert wird.

7. Dübel nach Anspruch 6, **dadurch gekennzeichnet, dass** das Loch (9) mit dem Dübel (1) koaxial ist und eine im wesentlichen doppelkonische Form ausweist, wobei die Abmessung des besagten Lochs (9) in der Nähe der beiden Enden (3) des Dübels am größten ist.

8. Dübel nach einem der Ansprüche 1 bis 7, **dadurch gekennzeichnet, dass** die Dicke des Körpers (2) in den dünnsten Zonen (8b) und in den dicksten Zonen (8a) identisch ist.

9. Dübel nach einem der Ansprüche 1 bis 7, **dadurch gekennzeichnet, dass** die Dicke des Körpers (2) in den dickeren Zonen (8a) größer ist als in den dünneren Zonen (8b), so dass die Höhe der Flügel (5) in den dickeren Zonen (8b) kleiner ist als die Höhe der Flügel (5) in den dünneren Zonen (8a).

10. Dübel nach einem der vorangehenden Ansprüche, **dadurch gekennzeichnet, dass** seine Länge zwischen 100 und 400 mm beträgt und vorzugsweise zwischen 175 und 266 mm, und die Gesamtdicke zwischen 30 und 80 mm und vorzugsweise zwischen 40 und 63 mm liegt.

11. Dübel nach einem der vorangehenden Ansprüche, **dadurch gekennzeichnet, dass** die Höhe der besagten Flügel (5) - lotrecht zur Längsrichtung (D) des Dübels betrachtet - zwischen 3 und 30 mm beträgt.

12. Dübel nach Anspruch 11, **dadurch gekennzeichnet, dass** die Breite der besagten Flügel (5) - parallel zur Längsrichtung (D) des Dübels betrachtet - zwischen 1 mm und dem Drittel der Höhe der Flügel (5) beträgt.

13. Dübel nach einem der vorangehenden Ansprüche, **dadurch gekennzeichnet, dass** der Freiraum (6) zwischen zwei aufeinanderfolgenden Flügeln (5) zwischen 0,5 und 30 mm beträgt.

14. Dübel nach einem der Ansprüche 12 oder 13, **dadurch gekennzeichnet, dass** die Außenseite der Flügel (5) eine Neigung zwischen 0 mm und der Breite der Flügel (5) aufweist.

15. Dübel nach einem der vorangehenden Ansprüche, **dadurch gekennzeichnet, dass** er aus einem flexiblen aber nicht brechbaren Material besteht.

16. Dübel nach Anspruch 15, **dadurch gekennzeichnet, dass** er aus hochbeständigem Polyamid besteht.

## Claims

1. A peg having a body (2) elongated in a longitudinal direction (D), provided with a succession of peripheral ribs (5) extending substantially transversely with respect to the longitudinal direction (D) of the peg (1), the said peg comprising a middle part (4) and two anchoring parts (7) carrying the said ribs (5), situated on each side of the said middle part (4), **characterised in that** each of the two anchoring parts (7) has at least two rib areas (8a, 8b) each comprising several ribs (5), the said rib areas (8a, 8b) having total thicknesses - in the radial direction - which are different, the thickest area (8a) of each of the said anchoring parts (7) being the closest to the middle part (4) and the least thick area (8b) of each of the said anchoring parts (7) being the closest to the corresponding end (3) of the peg (1).

2. A peg according to Claim 1, **characterised in that** the ribs (5) are separated, in the longitudinal direction (D) of the peg (1), by a space (6).

3. A peg according to Claim 1 or 2, **characterised in that** the ribs (5) have substantially a ring shape.

4. A peg according to one of Claims 1 to 3, **characterised in that** the said peg (1) has a plane symmetry with respect to a mid-plane (P) perpendicular to the direction (D).

5. A peg according to one of Claims 1 to 3, **characterised in that** the parts of the peg (1) disposed on each side of a mid-plane (P) perpendicular to the direction (D) have their longitudinal axes offset radially.

6. A peg according to one of Claims 1 to 5, **characterised in that** the said peg (1) has passing through it a hole (9) opening out on each side in the longitudinal direction.

7. A peg according to Claim 6, **characterised in that** the hole (9) is coaxial with the peg (1) and substantially biconical in shape, the dimension of the said hole (9) being the largest close to the two ends (3) of the peg.

8. A peg according to one of Claims 1 to 7, **characterised in that** the thickness of the body (2) is identical in the thinner areas (8b) and the thicker areas (8a).

9. A peg according to one of Claims 1 to 7, **characterised in that** the thickness of the body (2) is greater in the thicker areas (8a) than in the thinner areas (8b), so that the height of the ribs (5) in the thicker areas (8b) is less than the height of the ribs (5) in the thinner areas (8a).

10. A peg according to one of the preceding claims, **characterised in that** its length is between 100 and 400 mm and preferably between 175 and 266 mm and the total thickness between 30 and 80 mm and preferably between 40 and 63 mm.

11. A peg according to one of the preceding claims, **characterised in that** the height of the said ribs (5) - counted perpendicularly to the longitudinal direction (D) of the peg - is between 3 and 30 mm.

12. A peg according to Claim 11, **characterised in that** the width of the said ribs (5) - counted parallel to the longitudinal direction (D) of the peg - is between 1 mm and one third of the height of the ribs (5).

13. A peg according to one of the preceding claims, **characterised in that** the space (6) between two successive ribs (5) is between 0.5 and 30 mm.

14. A peg according to one of Claims 12 or 13,
**characterised in that** the external face of the ribs (5) has a slope of between 0 mm and the width of the ribs (5).

15. A peg according to one of the preceding claims, **characterised in that** it is produced from a material which is flexible but non-fragile.

16. A peg according to Claim 15, **characterised in that** it is produced from high-strength polyamide.
